# EUROPÄISCHE PATENTSCHRIFT

(11) **EP 1 994 280 B1**
(45) Veröffentlichungstag und Bekanntmachung des Hinweises auf die Patenterteilung: **27.02.2013**
(21) Anmeldenummer: 07822307.0
(22) Anmeldetag: 07.11.2007
(51) Int. Cl.: F03D 7/02, F03D 7/04

(54) **KOLLISIONSWARNSYSTEM FÜR EINE WINDENERGIEANLAGE**
COLLISION WARNING SYSTEM FOR A WIND ENERGY INSTALLATION
SYSTÈME D'AVERTISSEMENT DE RISQUE DE COLLISION DESTINÉ À UNE ÉOLIENNE

(30) Priorität: 17.11.2006 DE 102006054667
(43) Veröffentlichungstag der Anmeldung: 26.11.2008
(73) Patentinhaber: WINDCOMP GmbH, 20146 Hamburg (DE)
(72) Erfinder: Lucks, Christoph, 20146 Hamburg (DE)
(74) Vertreter: von Eichel-Streiber, Caspar
(86) Internationale Anmeldenummer: PCT/EP2007/061993
(87) Internationale Veröffentlichungsnummer: WO 2008/058876

(56) Entgegenhaltungen:
- EP-A- 0 995 904
- EP-A- 1 772 622
- WO-A-01/33075
- WO-A-2007/104306
- DE-C1- 10 032 314
- NL-C2- 1 018 670
- US-A1- 2003 127 862
- US-A1- 2004 057 828

## Beschreibung

### Technisches Gebiet

Die Erfindung betrifft ein Verfahren sowie eine Vorrichtung zur Überwachung einer Windenergieanlage mit einem Turm und einem an diesem angeordneten Rotor mit Rotorblättern hinsichtlich einer möglichen Kollision eines Rotorblattes mit dem Turm.

### Stand der Technik

Die überwiegende Zahl von Rotorblättern von Windenergieanlagen wird aus faserverstärkten Kunststoffen hergestellt. Charakteristisch für die Konstruktion von Strukturbauteilen aus faserverstärkten Kunststoffen ist die unterschiedliche Anordnung und Ausrichtung der Fasern in den einzelnen Bereichen des Blattkörpers. Auch können unterschiedliche Fasern wie Glas- und Kohlefasern miteinander kombiniert und sowohl als Massiv- und auch als Sandwich-Laminate verbaut werden. Somit weisen Rotorblätter von Windenergieanlagen eine komplexe und asymmetrische Struktur auf.

Die Aufgabe eines Rotors ist es, die kinetische Energie der bewegten Luftmasse in ein nutzbares Drehmoment umzuwandeln. Dies soll im Auslegungszeitraum der Windenergieanlage von typischerweise 20 Jahren sicher, das heißt ohne den Turm zu berühren, geschehen. In der Richtlinie des Germanischen Lloyd für die Zertifizierung von Windenergieanlagen Kapitel 6 "Strukturen" 6.2.4.1 Nachweiskonzept (7) und (8) wird der erforderliche Mindestabstand des Rotorblattes zum Turm bei allen Lastfällen wie folgt beschrieben: Die Bezugsgröße ist der Abstand des Rotorblattes zum Turm im entlasteten Zustand. Zu keinem Zeitpunkt darf ein Rotorblatt des sich drehenden Rotors einen Mindestabstand von 30% dieses Abstandes im entlaststeten Zustand unterschreiten.

Im Betrieb wird die Blattstruktur durch das Eigengewicht und den Wind dynamisch belastet; die Außenhaut ist dem Wetter ausgesetzt; und die Laminate können Feuchtigkeit aufnehmen.

Rotorblätter werden üblicherweise so ausgelegt, dass alle Betriebslasten und auch die Maximallasten einer starken Windböe in einem Auslegungszeitraum von 20 Jahren sicher aufgenommen werden können. Dem Umstand, dass Laminat durch ständige Belastungen altert und demnach alle Materialeigenschaften zeitabhängig sind, wird in der Auslegung der Blätter durch Sicherheitsfaktoren begegnet. Das heißt, die Rotorblätter sind üblicherweise so dimensioniert, dass sie auch nach 20 Jahren noch alle Lasten aufnehmen können sollen.

Einfluss auf die Dauerfestigkeit der Rotorblätter und deren Festigkeit bei Maximallasten haben zum einen die tatsächlichen Betriebslasten (Schräganströmung, Edgewise Vibrations, Stalleffekte und dergleichen) zum anderen aber auch Randbedingungen bei der Fertigung sowie Schäden durch äußere Einwirkungen wie zum Beispiel bei einem Blitzschlag.

Der allmähliche Abbau der Materialeigenschaften durch den Betrieb ist die eigentliche Abnutzung des Rotorblattes. Es ist bekannt, dass der Abbau der Materialeigenschaften bei faserverstärkten Kunststoffen durch einen Steifigkeits- und einen Festigkeitsverlust erkennbar ist. Diese negativen Änderungen der Materialeigenschaften wurden in Laborversuchen an Prüfkörpern nachgewiesen. Es ist ebenso bekannt, dass eine Änderung der Steifigkeit mit einer Änderung der Eigenfrequenz und einer Änderung des Biegeverhaltens einhergeht. Inwieweit jedoch die ermittelten Erkenntnisse aus Laborversuchen mit einfachen Testkörpern - unidirektionale Faserausrichtung bei gleichmäßigem Faseraufbau - auf komplexe Strukturen wie Rotorblätter von Windenergieanlagen übertragbar sind, ist mit derzeitigen Wissensstand nicht eindeutig erfassbar.

Nach den derzeit üblichen Prüfmethoden werden Rotorblätter in regelmäßigen Abständen einer Sichtprüfung unterzogen. Blätter werden abgeklopft, und es werden zum Beispiel Eigenfrequenzen gemessen. Alternativ werden thermografische Untersuchungen durchgeführt, oder Blätter werden mit Röntgenstrahlung oder Ultraschall durchleuchtet. All diesen Prüfmethoden ist gemein, dass zwar Auffälligkeiten erkannt aber nicht hinsichtlich der Festigkeit bewertet werden können, so dass eine zuverlässige Aussage über die Standsicherheit nicht möglich ist.

In der bisherigen Erfahrung mit dem Betrieb von Windenergieanlagen, bei der es auch unerwartet zu Kollisionen zwischen Blatt und Turm gekommen ist, zeigte sich dass mit einem kontrollierten Betrieb des Rotors die Standsicherheit wesentlich erhöht und Fehler frühzeitig entdeckt werden können. Eine Kollision des Rotors mit dem Turm im Betrieb führt zu erheblichen Schäden bis hin zum Totalverlust der gesamten Anlage.

Aus der DE 10 2005 048 805 und der US 2004/0057828 ist es bekannt, einen einzelnen Abstandssensor ortsfest am Turm anzubringen.

Dadurch ist es jedoch nur bei bestimmten Windrichtungen möglich, die Blattdurchbiegung zu bestimmen. Auch ist es aus der US 2004/0057828 bekannt, die Rotoren mit Dehnungsstreifen, die jedoch einer starken Drift unterliegen, zu versehen.

### Darstellung der Erfindung

Aufgabe dieser Erfindung ist es daher, ein Verfahren und eine Vorrichtung vorzuschlagen, welche eine Durchbiegung der Rotorblätter des Rotors einer Windenergieanlage während des gesamten Betriebs zuverlässig erfasst und frühzeitig kritische Änderungen erkennt und weitere Schäden vermeiden kann.

Diese Aufgabe wird hinsichtlich des Verfahrens mit einem Verfahren gemäß den Merkmalen des Anspruchs 1 gelöst. Vorteilhafte Weiterbildungen des Verfahrens sind in den abhängigen Ansprüchen 2 bis 7 angegeben.

Eine vorrichtungsseitige Lösung dieser Aufgabe ist in Anspruch 8 gekennzeichnet, wobei vorteilhafte Ausgestaltungen einer solchen Vorrichtung in den Ansprüchen 9 bis 10 genannt sind.

Erfindungsgemäß ist die Erfassung einer Durchbiegung des Rotorblattes mittels einer berührungslosen Abstandsmessung eine geeignete Größe um eine Aussage über die Festigkeit des Rotors und damit zur Standsicherheit der Windenergieanlage zu machen. Es genügt hierfür grundsätzlich einen einzigen Punkt am distalen Ende des Rotorblattes auf einen Abstand zu einem vorgegebenen Bezugspunkt, der mit Vorteil die Turmoberfläche ist, hin zu überwachen. Genauere Aus- und auch Vorhersagen lassen sich treffen, wenn man über die Länge des Rotorblattes verteilt Abstandsmessungen vornimmt, um eine "Biegelinie" zu erfassen. Dabei erfolgt die Überwachung durch einen auf der Gondel der Windenergieanlage positionierten berührungslosen Abstandssensor, der auf einen Punkt, in dem die distalen Enden der Rotorblätter die Vertikale durchlaufen, gerichtet ist.

Erfindungsgemäß ist die Erfassung der Biegelinie eines Rotorblattes, bzw. dessen Auslenkung bei Lasten die geeignete Größe, um eine Aussage über die Festigkeit des Rotors und damit zur Standsicherheit der Windenergieanlage zu machen.

Dabei ist es für eine zuverlässige Kollisionswarnung erfindungsgemäß entscheidend, die Auslenkung während des gesamten Betriebes zu überwachen. Ist eine Überwachung, wie vorbekannt, nur bei bestimmten Windrichtungen möglich, ist eine zuverlässige Kollisionswarnung nicht gewährleistet. Durch die erfindungsgemäße Anordnung wird es hingegen möglich, jeden Rotor in nur sehr kurzen Abständen, verursacht durch die Rotation der Rotoren um ihre horizontale Drehachse, zu überwachen und darauf aufbauend eine Kollision zu verhindern beziehungsweise eine Materialermüdung zu erkennen.

In einer einfachen Ausgestaltung des Verfahrens wird lediglich bei dem Erreichen kritischer Abstandswerte eine Kollisionswarnung ausgelöst, die insbesondere an das Betriebssystem der Windenergieanlage übertragen werden kann.

In einer verbesserten Ausgestaltung werden unter Einbeziehung von Betriebsdaten, wie z.B. Windgeschwindigkeit, Luftdichte, Temperatur, Windrichtung, generierte Leistung und dergleichen, die Lastzustände erfasst (vgl. Anspruch 6). Hier kann über einen Vergleich der Rotorblattdurchbiegung mit Referenzwerten eine Trendanalyse zum Betriebsverhalten erstellt werden. Mit dieser Ausgestaltung können zum Beispiel sehr frühzeitig Aussagen über die zu erwartende Restlaufzeit gegeben werden, und Anomalitäten und kritische Lastzustände können erkannt werden.

Aufgrund des komplexen strukturellen Aufbaus eines Rotorblattes ist eine Bewertung sich durch den Betrieb verändernden Materialeigenschaften zwar auch mit der Messung der sich ändernden Eigenfrequenzen denkbar, eine direkte Aussage zur Restfestigkeit des vermessenen Rotorblattes und damit zur Standsicherheit der gesamten Windenergieanlage ist jedoch nicht sicher möglich. Im Gegensatz dazu kann mit der Vermessung der Biegelinie eines Rotorblattes in Abhängigkeit von der einwirkenden Kraft (z.B. reale Windlast bei Nennleistung, kontrollierte Krafteinleitung bei stationärer Messung) eine sichere Aussage über die Restfestigkeit des Rotors und damit über die Standsicherheit der gesamten Windenergieanlage gemacht werden.

Die berührungslose Abstandsmessung kann grundsätzlich auf alle erdenklichen und technisch möglichen Arten erfolgen, wobei hier insbesondere optische Messungen (insbesondere mittels Laser), Ultraschallmessungen oder Radar bevorzugt werden.

In Bezug auf die erfindungsgemäße Anordnung des/der Sensoren ist dies erfindungsgemäße ein auf Drehungen um die Turmlängsachse mitgeführter Sensor bzw. sind dies solche Sensoren, aufgrund der Anordnung derselben auf der Gondel.

Eine Zuordnung der Messdaten zu einem bestimmten Rotorblatt ist möglich, indem z.B. bei Beginn einer Messreihe eine Relation zwischen einem bestimmten Rotorblatt und einem Messwert festgelegt und anschließend die nachfolgenden Messwerte getaktet den weiteren Rotorblättern zugeordnet werden. Auch ist es denkbar, die Rotorblätter bei einer optischen Abstandsmessung mit unterschiedlichen optischen Markierungen zu versehen, die bei der Abstandsmessung mit erfasst und zur Identifikation eines bestimmten Rotorblattes ausgewertet werden.

Bei der erfindungsgemäßen Anordnung eines Abstandssensors auf der Gondel "zielt" dieser mit seinem Messbereich "nach oben" und zwar in einen Bereich, in dem die Rotorblätter mit ihren distalen Enden die Vertikale durchlaufen. Diese Anordnung hat den Vorteil, dass der Einfluss des Turmvorstaus auf die Durchbiegung des Rotorblattes ausgeklammert wird.

Die Abstandssensoren können insbesondere über drahtlose Datenverbindungen mit der Auswerteelektronik verbunden sein.

Kurze Beschreibung der Abbildungen der Zeichnungen

Weitere Vorteile und Merkmale der Erfindung ergeben sich aus der nachfolgenden Schilderung eines Ausführungsbeispiels anhand der beigefügten Figur. Hierbei zeigt:

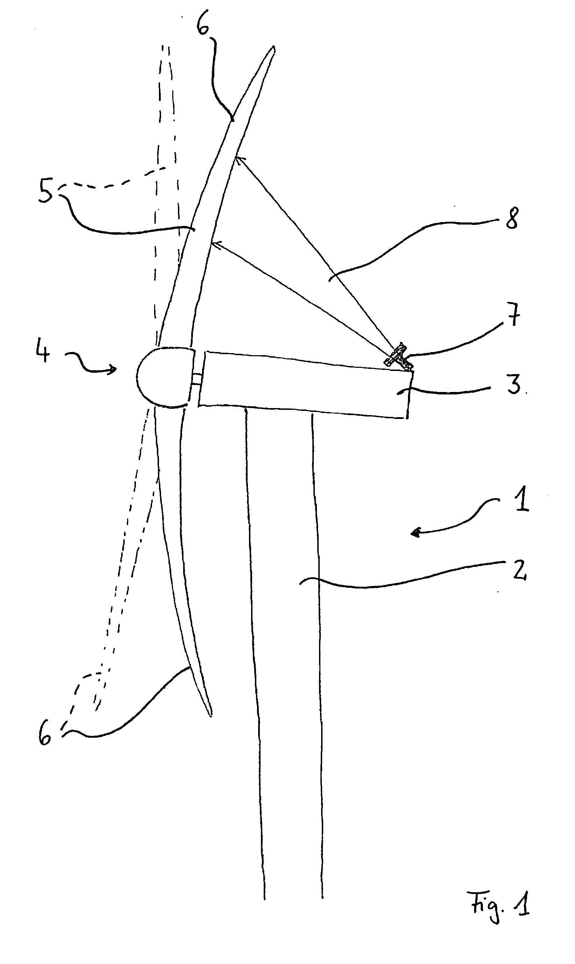

Fig. 1: schematisch eine Windenergieanlage mit einem erfindungsgemäßen Kollisionswarnsystem.

### Weg(e) zur Ausführung der Erfindung

In der einzigen Figur ist eine Windenergieanlage schematisch dargestellt und allgemein mit 1 bezeichnet. Die Windenergieanlage 1 weist einen Turm 2 auf, an dessen oberen Ende eine Gondel 3 um die Längsachse des Turmes 2 drehbar angeordnet ist. An der Gondel 3 ist ein Rotor 4 festgelegt mit Rotorblättern 5. Diese werden vom Winddruck angetrieben und führen zu einer Rotation des Rotors 4 gegenüber der Gondel 3, wodurch eine an dem Rotor festgelegte Welle angetrieben wird, deren Rotationsenergie im Innern der Windenergieanlage 1 in bekannter Weise in elektrische Energie gewandelt wird.

In der Figur ist schematisch eine Windenergieanlage 1 mit einem Rotor 4 mit zwei Rotorblättern 5 dargestellt, die Erfindung ist auf eine solche Windenergieanlage allerdings nicht beschränkt. Sie kann insbesondere auch mit den derzeit üblichen, Rotoren mit drei oder mehr Rotorblättern aufweisenden Anlagen verwendet werden.

In gestrichelten Linien sind in der Figur die Rotorblätter 5 in einer neutralen Position, d.h. ohne angreifende Windlast, gezeigt. Während des Betriebes lastet abhängig von der Windgeschwindigkeit ein Winddruck auf den Rotorblättern 5, so dass sich diese unter dieser Last durchbiegen und sie die in durchgezogenen Linien dargestellte Position einnehmen.

Mit dem Betrieb geht ein allmählicher Abbau der Materialeigenschaften der Rotorblätter 5 einher. Das heißt, ein Rotorblatt 5 verliert allmählich seine Festigkeit und biegt sich bei gleichen Lasten immer weiter durch. In der Auslegung ist dies berücksichtigt; Rotorblätter 5 die spezifikationsgerecht gefertigt und betrieben werden, sollen über die gesamte Lebensdauer der Anlage von typischerweise 20 Jahren eine ausreichende Festigkeit aufweisen.

Ein Verlust der Biegefestigkeit durch die oben beschriebenen Einflussfaktoren macht sich durch eine Änderung der Biegelinie und der Auslenkung der Rotorblätter 5 bemerkbar.

Der kollisionskritische Bereich ist der Bereich des Turmes 2, der in Höhe der äußeren Kreisbahn der Rotorblätter 5 liegt. Dieser Bereich wird bei der gezeigten Ausführungsform in erfindungsgemäßer Weise mit einem berührungslos arbeitenden, auf der Gondel 3 angeordneten Abstandssensor 7 überwacht, indem dieser die distalen Enden 6 der Rotorblätter 5 in ihrer Position in einer vertikalen Position der letzteren oberhalb der Gondel 3 überwacht. Dieser Abstandssensor 7 kann einen Messbereich 8 aufweisen. Bei Unterschreiten kritischer Abstandswerte wird ein Signal an eine in einem Betriebsführungssystem der Windenergieanlage 1 enthaltene Auswerteelektronik übertragen.

In einer einfachen Variante wird mit dem erfindungsgemäßen System lediglich eine drohende Kollision eines Rotorblattes 5 mit dem Turm 2 überwacht, wobei ein unterschrittener Mindestabstand des distalen Endes 6 des Rotorblattes 5 als Kollisionswarnung gewertet wird. Über die Auswerteelektronik wird dann dem Betriebssystem eine Warnung zugeführt, auf die hin das Betriebssystem insbesondere eine Notabschaltung der Windenergieanlage 1 durchführen und ggf. eine Meldung an einen Servicepunkt abgeben kann.

In einer weiteren Varianten werden die Abstandsdaten unter Berücksichtigung weiterer in dem Betriebssystem der Windenergieanlage 1 aktuell ohnehin üblicherweise erfassten Daten wie Windgeschwindigkeit, aktuelle Leistung (Last), Temperatur usw. ausgewertet, um eine Verschleißkurve des Rotorblattes 5 zu erstellen und Aussagen über die verbleibende Lebensdauer des Rotorblattes treffen zu können. So können z.B. frühzeitig Warnungen generiert werden, die einen demnächst erforderlichen Austausch des betroffenen Rotorblattes rechtzeitig anzeigen, so dass der Betreiber der Windenergieanlage 1 frühzeitig für einen nötigen Austausch des Rotorblattes 5 planen kann.

Die Vorteile der Erfindung und ihrer vorteilhaften Varianten sind zusammengefasst:
- Berührungslose Messung der Biegelinie und der Auslenkung des Rotors im Betrieb der Anlage;
- frühzeitige Kollisionswarnung;
- Erkennung von Anomalien und dadurch Erhöhung der Standsicherheit;
- autarker Betrieb, Herstellerdaten oder Zugriff auf Anlagendaten nicht notwendig - Anwendung der GL-Richtlinie, Messung des Turmabstandes im entlasteten Zustand;
- mit Anlagenvernetzung und Austausch mit Anlagendaten als Condition Monitoring System geeignet;
- netzunabhängiger Betrieb durch Energieversorgung mit PV-Anlage möglich;
- einfache Montage durch drahtlose Datenübertragung.

Bezugszeichenliste

1 Windenergieanlage

2 Turm

3 Gondel

4 Rotor

5 Rotorblatt

6 distales Ende

7 Abstandssensor

8 Messbereich

## Patentansprüche

1. Verfahren zur Überwachung einer Windenergieanlage (1) mit einem Turm (2) und einem an diesem angeordneten Rotor (4) mit Rotorblättern (5) hinsichtlich einer möglichen Kollision eines Rotorblattes mit dem Turm, wobei während des Betriebes eine Durchbiegung des Rotorblattes mittels einer berührungslosen Abstandsmessung gemessen und bei einer ein kritisches Maß übersteigenden Durchbiegung eine Kollisionswarnung ausgegeben wird, **dadurch gekennzeichnet, dass** die berührungslose Abstandsmessung mittels eines auf einer den Rotor tragenden, gegenüber dem Turm um dessen Längsachse drehbaren Gondel angeordneten Abstandssensors (7) erfolgt, der auf einen Punkt, in dem die distalen Enden (6) der Rotorblätter (5) die Vertikale durchlaufen, gerichtet ist, wobei dadurch in jeder im Betrieb durch Drehung um die Turmlängsachse möglichen Rotorstellung die Bestimmung der Durchbiegung möglich ist.

2. Verfahren nach Anspruch 1, **dadurch gekennzeichnet, dass** mittels der berührungslosen Abstandsmessung ein Abstand des distalen Endes eines Rotorblattes zum Turm bestimmt wird.

3. Verfahren nach einem der vorhergehenden Ansprüche, **dadurch gekennzeichnet, dass** zur Festlegung des für die Ausgabe einer Kollisionswarnung bestimmenden kritischen Maßes eine prozentuale Unterschreitung eines zuvor mittels der berührungslosen Abstandsmessung unter lastfreier Bedingung des Rotors für das Rotorblatt aufgenommenen Ausgangsabstandes verwendet wird.

4. Verfahren nach einem der vorhergehenden Ansprüche, **dadurch gekennzeichnet, dass** die berührungslose Abstandsmessung optisch, vorzugsweise mittels Laserlicht, erfolgt.

5. Verfahren nach einem der Ansprüche 1 bis 4, **dadurch gekennzeichnet, dass** die berührungslose Abstandsmessung mittels einer Ultraschall-Entfernungsmessung erfolgt.

6. Verfahren nach einem der Ansprüche 1 bis 4, **dadurch gekennzeichnet, dass** die berührungslose Abstandsmessung mittels einer Radar-Entfernungsmessung erfolgt.

7. Verfahren nach einem der vorhergehenden Ansprüche, **dadurch gekennzeichnet, dass** für eine Analyse eines Alterungszustandes des Rotorblattes zusätzlich zu dem mittels der berührungslosen Abstandsmessung bestimmten Abstand weiterhin Daten über die aktuelle Windgeschwindigkeit und die aktuelle Anlagenleistung sowie ggf. aktuelle Wetterdaten wie z.B. Temperatur und Luftfeuchtigkeit, berücksichtigt werden.

8. Vorrichtung zur Überwachung einer Windenergieanlage (1) mit einem Turm (2) und einem an diesem angeordneten Rotor (4) mit Rotorblättern (5) hinsichtlich einer möglichen Kollision eines Rotorblattes (5) mit dem Turm (2) mit wenigstens einem an der Windenergieanlage (1) angeordneten Abstandssensor (7) für eine berührungslose Messung des Abstandes der Rotorblätter (5) zu einem vorgegebenen Punkt der Windenergieanlage (1) sowie einer Auswerteelektronik, in welcher die von dem wenigstens einen Abstandssensor (7) gemessenen Abstandsdaten ausgewertet werden und welche bei Unterschreiten eines kritischen Abstandes eine Kollisionswarnung ausgibt, **dadurch gekennzeichnet, dass** auf einer den Rotor (4) tragenden, gegenüber dem Turm (2) um dessen Längsachse drehbaren Gondel (3) ein auf einen Punkt, in dem die distalen Enden (6) der Rotorblätter (5) die Vertikale durchlaufen gerichteter Abstandssensor (7) angeordnet ist, wobei dadurch mit dem Abstandssenor in jeder im Betrieb durch Drehung um die Turmlängsachse möglichen Rotorstellung die Bestimmung der Durchbiegung möglich ist.

9. Vorrichtung nach Anspruch 8, **dadurch gekennzeichnet, dass** eine Datenverbindung zwischen den Abstandssensoren (7) und der Auswertelektronik drahtlos aufgebaut ist.

10. Vorrichtung nach einem der Ansprüche 8 oder 9, **dadurch gekennzeichnet, dass** die Auswerteelektronik mit einer Not-Abschaltung verbunden ist, wobei bei einer Kollisionswarnung die Auswerteelektronik die Not-Abschaltung aktiviert.

## Claims

1. A method of monitoring a wind power plant (1) fitting with a tower (2) and a rotor (4) arranged thereon, with rotor blades (5) in view of a possible collision of a rotor blade with the tower, whereas during the operation a deflection of the rotor blade is measured by means of a contactless spacing measurement and in case of a deflection exceeding a critical value, a collision warning is issued, **characterised in that** the contactless spacing measurement is performed by means of a distance sensor (7) arranged on the gondola, which carries the rotor and rotates with respect to the tower around its longitudinal axis, which is directed to a point inasmuch as the distal ends (6) of the rotor blades (5) run through the vertical, whereas the deflection can be determined in every possible rotor position during exploitation by rotating around the longitudinal axis of the tower.

2. The method of claim 1, **characterised in that** a distance of the distal end of a rotor blade to the tower is determined by means of the contactless spacing measurement.

3. A method according to any of the preceding claims, **characterised in that** for setting the decisive value critical for outputting a collision warning, a proportional lower deviation of an initial starting distance recorded previously by means of the contactless spacing measurement in no-load condition of the rotor for the rotor blade is used.

4. A method according to any of the preceding claims, **characterised in that** the contactless spacing measurement is carried out optically, preferably by means of a laser light.

5. The method according to one of the claims 1 to 4, **characterised in that** the contactless spacing measurement uses an ultrasound distance measurement.

6. The method according to one of the claims 1 to 4, **characterised in that** the contactless spacing measurement uses a radar distance measurement.

7. A method according to any of the preceding claims, **characterised in that** for analysing the ageing condition of the rotor blade In addition to the distance determined by means of the contactless spacing measurement, further data are taken into account, on the current wind velocity and the current plant power as well as current weather data such as for instance temperature and air humidity.

8. A method of monitoring a wind power plant (1) fitting with a tower (2) and a rotor (4) arranged thereon, with rotor blades (5) in view of a possible collision of a rotor blade with the tower, with at least one distance sensor (7) arranged on the wind power plant (1) for contactless measurement of the distance of the rotor blades (5) to a preset point of the wind power plant (1) as well as with an interpretation electronic circuit, in which the distance data measured by said at least one distance sensor (7) are interpreted and which in case of lower deviation with respect to a critical distance issues a collision warning, **characterised in that** a distance sensor (7) directed to a point in which the distal ends (6) of the rotor blades (5) runs through the vertical, is arranged on a gondola (3) carrying the rotor (4) and rotating with respect to the tower (2) about its longitudinal axis, whereas the deflection can be determined with the distance sensor in every possible rotor position during exploitation by rotating around the longitudinal axis of the tower.

9. An apparatus as claimed in claim 8, **characterised in that** a data connection between the distance sensors (7) and the interpretation is provided wireless.

10. The device according to one of the claims 8 or 9, **characterised in that** the interpretation electronic circuit is connected to an emergency stop switch, whereas in case of a collision warning, the interpretation electronic circuit actuates the emergency stop switch.

## Revendications

1. Procédé de surveillance d'une installation éolienne (1) avec une tour (2) et un rotor (4) agencé sur celle-ci, avec des lames de rotor (5) pour éviter toute collision possible d'une lame de rotor avec la tour, alors que pendant le fonctionnement on mesure une flexion de la lame de rotor à l'aide d'une mesure d'écartement sans contact et lance une alerte de collision lorsque la flexion dépasse une valeur critique, **caractérisé en ce que** la mesure d'écartement sans contact s'effectue à l'aide d'un capteur d'écartement (7) disposé sur la gondole portant le rotor, tournant par rapport à la tour autour de son axe longitudinal, qui est dirigé vers un point dans lequel les extrémités distales (6) des lames de rotor (5) passent par la verticale, tandis que l'on détermine la flexion dans chaque position de rotor possible pendant l'exploitation en tournant autour de l'axe longitudinal de la tour.

2. Procédé selon la revendication 1, **caractérisé en ce que** l'on détermine un écartement de l'extrémité distale d'une lame de rotor par rapport à la tour à l'aide de la mesure d'écartement sans contact.

3. Procédé selon l'une quelconque des revendications précédentes, **caractérisé en ce que** pour fixer la valeur critique déterminante pour le lancement d'une alerte de collision, on utilise un franchissement proportionnel à la baisse d'un écartement de sortie enregistré au préalable à l'aide de la mesure d'écartement sans contact en condition sans charge du rotor pour la lame de rotor.

4. Procédé selon l'une quelconque des revendications précédentes, **caractérisé en ce que** la mesure d'écartement sans contact s'effectue optiquement, de préférence à l'aide d'une lumière laser.

5. Procédé selon l'une quelconque des revendications 1 à 4, **caractérisé en ce que** la mesure d'écartement sans contact s'effectue à l'aide d'une mesure de distance par ultrasons.

6. Procédé selon l'une quelconque des revendications 1 à 4, **caractérisé en ce que** la mesure d'écartement sans contact s'effectue à l'aide d'une mesure de distance par radar.

7. Procédé selon l'une quelconque des revendications précédentes, **caractérisé en ce que** pour analyser l'état de vieillissement de la lame de rotor en plus de l'écartement défini à l'aide de la mesure d'écartement sans contact, on utilise d'autres données sur la vitesse de vent courante et la puissance de l'installation de même que des données météorologiques courantes éventuelles comme par exemple la température et l'humidité de l'air.

8. Procédé de surveillance d'une installation éolienne (1) avec une tour (2) et un rotor (4) agencé sur celle-ci, avec des lames de rotor (5) pour éviter toute collision possible d'une lame de rotor (5) avec la tour (2), avec au moins un capteur d'écartement (7) disposé sur l'installation éolienne (1), pour une mesure sans contact de l'écartement des lames de rotor (5) par rapport à un point donnée de l'installation éolienne (1) de même qu'un circuit électronique d'interprétation, dans lequel l'on interprète les données d'écartement mesurées par au moins un capteur d'écartement (7) et qui en cas de dépassement par le bas d'un écartement critique lance une alerte de collision, **caractérisé en ce qu'**un capteur d'écartement (7) dirigé vers un point dans lequel les extrémités distales (6) des lames de rotor (5) passent par la verticale est disposé sur une gondole (3) portant le rotor (4), rotative par rapport au tour (2) et autour de son axe longitudinal, tandis que l'on détermine à l'aide du capteur d'écartement la flexion dans chaque position de rotor possible pendant l'exploitation en tournant autour de l'axe longitudinal de la tour.

9. Dispositif selon la revendication 8, **caractérisé en ce qu'**une liaison de données est construite sans fil entre les capteurs d'écartement (7) et le circuit électronique d'interprétation.

10. Dispositif selon l'une des revendications 8 ou 9, **caractérisé en ce que** le circuit électronique d'interprétation est relié à un interrupteur d'arrêt d'urgence, alors qu'an cas d'alerte de collision, le circuit électronique d'interprétation active l'interrupteur d'arrêt d'urgence.
